# EUROPÄISCHE PATENTSCHRIFT

(11) **EP 1 756 230 B1**
(45) Veröffentlichungstag und Bekanntmachung des Hinweises auf die Patenterteilung: **03.11.2010**
(21) Anmeldenummer: 05745170.0
(22) Anmeldetag: 18.05.2005
(51) Int. Cl.: C09B 37/00, C09B 67/26, C09B 67/54, C09B 35/42, C09B 35/52, C09B 35/38

(54) **VERFAHREN ZUR HERSTELLUNG EINER FLÜSSIGFORMULIERUNG VON SALZEN SULFONSAURER AZOFARBSTOFFE**
METHOD FOR PRODUCING A LIQUID FORMULATION OF SALTS OF SULPHONIC-ACID AZO DYES
PROCEDE POUR PRODUIRE UNE FORMULATION LIQUIDE DE SELS DE COLORANTS AZO COMPRENANT DE L'ACIDE SULFONIQUE

(30) Priorität: 19.05.2004 DE 102004025443
(43) Veröffentlichungstag der Anmeldung: 28.02.2007
(73) Patentinhaber: BASF SE, 67056 Ludwigshafen (DE)
(72) Erfinder: SCHRÖDER, Gunter-Rudolf, 68259 Mannheim (DE); DECKER, Jürgen, 67373 Dudenhofen (DE); REICHELT, Helmut, 67435 Neustadt (DE); KLOPP, Ingo, 67256 Weisenheim (DE); DIEFENBACHER, Armin, 76726 Germersheim (DE); VOss, Hartwig, 67227 Frankenthal (DE)
(86) Internationale Anmeldenummer: PCT/EP2005/005392
(87) Internationale Veröffentlichungsnummer: WO 2005/113681

(56) Entgegenhaltungen:
- EP-A- 0 045 840
- EP-A- 0 421 916
- WO-A-01/32786
- WO-A-01/90257
- WO-A-03/040240
- WO-A-2004/048478
- DE-C- 46 804
- GB-A- 1 359 898
- US-B1- 6 533 826
- DATABASE WPI Section Ch, Week 198706 Derwent Publications Ltd., London, GB; Class A23, AN 1987-040176 XP002341010 & JP 61 296069 A (NIPPON KAGAKU KOGYOSHO KK) 26. Dezember 1986 (1986-12-26) in der Anmeldung erwähnt & CHEMICAL ABSTRACTS, Bd. 107, Nr. 6, 10. August 1987 (1987-08-10), Columbus, Ohio, US; abstract no.: 41689, TANIGUCHI ET. AL.: "Concentrated aqueous dye solution compositions"

## Beschreibung

Die vorliegende Erfindung betrifft ein Verfahren zur Herstellung einer Flüssigformulierung von Salzen sulfonsaurer Azofarbstoffe.

Vesuvin und dessen Kupplungsprodukte wie C.I. Direct Brown 44 sind seit Anbeginn der Farbstoffchemie bekannt. So ist dem Colour Index zu entnehmen, dass formal zwei Teile Sulfanilsäure auf ein Teil Vesuvin (Bismarck Brown C.I. 21000) gekuppelt werden, um zu C.I. Direct Brown 44 zu gelangen. Die hierin zitierte deutsche Patentschrift 46804 lehrt die Umsetzung von Vesuvin mit Sulfanilsäure. Das Produkt ist jedoch mit großen Mengen Vesuvin verunreinigt, die durch Filtration abgetrennt werden. Der Farbstoff wird aus der wässrigen Lösung durch Aussalzen gewonnen. Ein durch Aussalzen erhaltener Farbstoff ist jedoch zur Herstellung von Flüssigformulierungen ungeeignet, da er mit einer viel zu hohen Salzfracht behaftet ist. Ferner sind derartige Isolierschritte sehr aufwändig.

Die JP 61 296 069 lehrt die Herstellung des Lithiumsalzes von Direct Brown 44, indem ausgehend vom Natriumsalz die Säure gefällt wird und anschließend mit Lithiumhydroxid das Lithiumsalz hergestellt wird.

Weiterhin lehrt die ältere PCT-Anmeldung PCT/EP/03/12803 die Herstellung einer Flüssigformulierung von Direct Brown 44 ausgehend von m-Phenylendiamin ohne Zwischenisolierung des Vesuvin, durch Isolierung von Direct Brown 44 in der Säureform und anschließendes Lösen in wässrigen Basen.

Alle diese Verfahren des Standes der Technik beinhalten einen Zwischenschritt, bei dem der Farbstoff als Feststoff isoliert wird, um so Salzfracht oder Verunreinigungen abzutrennen. In der Praxis ist man dagegen bestrebt, eine Verarbeitung als Feststoff, was in der Regel eine Filtration und damit auch einen gut filtrierbaren Feststoff erfordert, zu vermeiden.

Daher war es Aufgabe der vorliegenden Erfindung, ein Verfahren zur Verfügung zu stellen, dessen Ergebnis eine lagerstabile, salzarme Flüssigformulierung der Farbstoffe liefert und die Zwischenisolierung eines Feststoffes vermeidet.

Gelöst wird diese Aufgabe durch ein Verfahren zur Herstellung einer Flüssigformulierung von Salzen sulfonsaurer Azofarbstoffe durch Kuppeln einer wenigstens äquimolaren Menge von diazotierten Aminoarylsulfonsäuren I

H₂N-Ar-SO₃H (I)

wobei Ar Phenylen, das einfach mit Sulfo, oder Naphthylen, das ein- oder zweifach mit Sulfo und/oder einfach mit Hydroxy substituiert sein kann, bedeutet, auf das Kupplungsprodukt eines Phenylendiamins auf sich selbst, das gegebenenfalls methylsubstituiert ist, **dadurch gekennzeichnet, dass** man den Azofarbstoff im Basischen löst und anschließend eine Nanofiltration durchführt.

Die Farbstoffe fallen unter Kupplungsbedingungen als Feststoffe an, so dass man eine wässrige Suspension erhält. Unter im Basischen lösen ist zu verstehen, dass man den Azofarbstoff löst, indem man den pH-Wert des Reaktionsgemisches basisch, also auf einen pH-Wert im Bereich von 8 bis 14, stellt. Dies geschieht bevorzugt durch Dosieren der Base zum wässrigen Reaktionsgemisch. Verfahrenstechnisch wird dabei die Zugabe der Base als wässrige Lösung in der Regel der Feststoffzugabe vorgezogen.

Geeignet sind Basen, deren Kationen als Gegenionen die Farbstoffe in Lösung halten, wie wässrige Lösungen von Lithium-, Natrium- und Kaliumhydroxid. Ferner sind geeignet stickstoffhaltige Basen wie Ammoniakwasser, substituierte Amine wie Monoalkyl-, Dialkyl- oder Trialkylamine, Tetraalkylammonium- oder Benzyltrialkylammoniumhydroxyde oder solche Amine, die sich von stickstoffhaltigen fünf- oder sechsgliedrigen gesättigten Heterocyclen ableiten, wie Pyrrolidin, Piperidin, Morpholin oder Piperazin oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch ein oder zwei Hydroxylgruppen substituiert und/oder durch ein bis vier Sauerstoffatome in Etherfunktion unterbrochen sein kann.

Bevorzugt löst man den Farbstoff mit Natronlauge und einer stickstoffhaltigen Base. Insbesondere sind Natronlauge und als stickstoffhaltige Base Ammoniakwasser und substituierte Amine wie Monoalkyl-, Dialkyl- und Trialkylamine geeignet, da diese besonders stabile Flüssigformulierungen geben. Unter Alkyl ist dabei bevorzugt geradkettiges oder verzweigtes C₁-C₄-Alkyl zu verstehen, das durch ein oder zwei Hydroxylgruppen substituiert und/oder durch ein bis zwei Sauerstoffatome in Etherfunktion unterbrochen sein kann. Insbesondere wird Natronlauge in Kombination mit Ammoniakwasser bevorzugt. Ammoniakwasser ist eine 20 - 30 gew.%ige Lösung von Ammoniak in Wasser.

Das Verhältnis von Natronlauge zur stickstoffhaltigen Base speziell Ammoniakwasser ist variabel. In der Regel setzt man 0,1 -1,9 Mol Natronlauge pro Mol Farbstoff ein. Die restliche zum Lösen der gesamten Farbstoffmenge benötigte Menge Base ist die stickstoffhaltige Base, bevorzugt Ammoniakwasser. Bei einem Farbstoff mit zwei Sulfogruppen muss die Gesamtmenge aus Natronlauge und stickstoffhaltiger Base etwas mehr als 2 Mol bezogen auf 1 Mol Farbstoff sein. Bevorzugt werden Natronlauge und stickstoffhaltige Base, bevorzugt Ammoniak im Molverhältnis 0,1/1,9 bis 1,9/0,1, bevorzugt 0,7/1,3 bis 1,3/0,7, insbesondere 0,9/1,1 bis 1,1/0,9 und besonders bevorzugt annähernd äquimolar einsetzt. Die Zugabe von Natronlauge und der stickstoffhaltigen Base kann getrennt oder als Mischung erfolgen oder eine Kombination aus beidem sein. Aus wirtschaftlichen Gründen wählt man den pH-Wert so, dass der Farbstoff gerade vollständig gelöst ist.

Bevorzugt stellt man den pH-Wert auf einen Wert im Bereich von 8,5 - 11, bevorzugt 8,5 -10,5, insbesondere 9 - 9,5 ein. Technisch sind durchaus auch höhere Werte möglich, doch je nach pk_{B}-Wert der stickstoffhaltigen Base würde dann durch die Nanofiltration zu viel Base abgetrennt, was unwirtschaftlich wäre.

Die sich anschließende Nanofiltration dient dem Entsalzen und gegebenenfalls Aufkonzentrieren der Farbstofflösung. Als bevorzugte Membranen in der erfindungsgemäß eingesetzten Membrantrenneinheit werden kommerziell verfügbare Nanofiltrationsmembranen mit Trenngrenzen von 200 Dalton bis 2 000 Dalton, besonders bevorzugt 200 Dalton bis 1000 Dalton, verwendet. Die Transmembrandrücke betragen 1 bis 50 bar bei Temperaturen bis 100°C.

Höhere Transmembrandrücke führen im allgemeinen zu höheren Permeatflüssen. Höhere Temperaturen führen prinzipiell zu höheren Permeatflüssen und sind daher bevorzugt, sofern keine Zersetzung des Produkts eintritt.

Für die Membrantrenneinheit kommen alle Membranen in Betracht, die im jeweiligen System unter den erforderlichen Trennbedingungen stabil sind. Die Trennschichten der einsetzbaren Membranen können aus organischen Polymeren, Keramik, Metall, Kohlenstoff oder Kombinationen daraus bestehen und müssen in dem Reaktionsmedium und bei der Prozesstemperatur stabil sein. Aus mechanischen Gründen sind die Trennschichten in der Regel auf einer ein- oder mehrschichtigen porösen Unterstruktur aufgebracht, die aus dem gleichen oder auch aus mindestens einem unterschiedlichen Material wie die Trennschicht besteht. Beispiele sind Trennschichten aus Keramik und Unterstrukturen aus Metall, Keramik oder Kohlenstoff, Trennschichten aus Kohlenstoff und Unterstrukturen aus Metall Keramik oder Kohlenstoff, Trennschichten aus Polymeren und Unterstrukturen aus Polymer, Metall, Keramik oder Keramik auf Metall. Als polymere Trennschichten werden beispielsweise Polysulfon, Polyethersulfon, Polydimethylsiloxan (PDMS), Polyetheretherketon, Polyamid und Polyimid eingesetzt.

Besonders bevorzugt sind anorganische Membranen, insbesondere Membranen mit keramischen Trennschichten. Im Vergleich zu Membranen mit polymeren Trennschichten wird mit diesen Membranen ein besserer Salzdurchgang und ein höherer Permeatfluss erreicht. Als keramische Trennschichten werden beispielsweise α-Al₂O₃, ZrO₂, TiO₂, SiC oder gemischte keramische Werkstoffe eingesetzt.

Es wurde nun gefunden, dass Membranen mit keramischen Trennschichten sich hervorragend für die Nanofiltration von anionischen Direktfarbstoffen sowie kationischen Farbstoffen eignen. Bevorzugt werden sie zur Nanofiltration von anionischen Direktfarbstoffen eingesetzt. Die Einsetzbarkeit der Membranen sowohl für anionische als auch für kationische Farbstoffe ist wirtschaftlich von großer Bedeutung, da sie die Flexibilität einer Anlage deutlich erhöht und somit nur eine Nanofiltrationsmembran für die Produktion unterschiedlicher Farbstoffe benötigt wird.

Die Membranen werden üblicherweise in druckfeste Gehäuse eingesetzt, welche die Trennung zwischen Retentat (farbstoffreicher Rückstand) und Permeat (farbstoffarmes Filtrat) bei den für die Trennung erforderlichen Druckbedingungen erlauben. Die Membranen können in Flach-, Rohr-, Multikanalelement-, Kapillar- oder Wickelgeometrie ausgeführt werden, für die entsprechende Druckgehäuse, die eine Trennung zwischen Retentat und dem Permeat erlauben, verfügbar sind. Je nach Flächenbedarf kann ein Membranelement mehrere Kanäle enthalten. Weiterhin können mehrere dieser Elemente in einem Gehäuse zu einem Modul zusammengefasst werden. Die Überströmgeschwindigkeit in dem Modul beträgt abhängig von der Modulgeometrie zwischen 0,2 und 10 m/s. Typische Werte sind dabei 0,2 bis 0,4 m/s bei einer Wickelgeometrie und 1 bis 6 m/s bei einer Rohrgeometrie.

In der Regel erhält man durch das Lösen des Farbstoffs im Basischen eine Farbstofflösung deren Farbstoffgehalt 3 bis 10 Gew.-% beträgt. Eine solche Lösung kann direkt mittels Nanofiltration entsalzt und gegebenfalls aufkonzentriert werden. Liegt eine konzentrierte Farbstofflösung vor, kann es vorteilhaft sein, das Gemisch mit Wasser auf eine 3 bis 6 gew.-%ige Farbstofflösung zu verdünnen, um bei der Filtration höhere Flussraten zu erzielen und somit die Raum-Zeit-Ausbeute zu erhöhen.

Bevorzugt wird ein Teil des Nanofiltrationsschritts als Diafiltration durchgeführt. Eine Diafiltration ist **dadurch gekennzeichnet, dass** das abgezogene Permeat ganz oder teilweise durch ein geeignetes Diafiltrationsmedium ersetzt wird. Im erfindungsgemäßen Verfahren wird das Permeat bevorzugt durch eine wässrige Lösung einer stickstoffhaltigen Base ersetzt, um den pH-Wert konstant zu halten. Erstaunlicherweise entspricht trotz Änderung der Farbstoffkonzentration und Abtrennen von stickstoffhaltiger Base das Verhältnis der Kationen Natrium/Ammonium nach der Nanofiltration dem Verhältnis, welches vor der Filtration eingestellt wurde.

In einer bevorzugten Variante, gelingt es, bei einer Gesamtpermeatmenge, die der 1 bis 10 fachen Menge der eingesetzten Farbstoff-Rohlösung entspricht, die Menge an anorganische Salzen (insbes. NaCl) auf < 2 Gew.-% bezogen auf den reinen 100 %i-gen Farbstoff zu reduzieren.

Der Ersatz des Permeats im Diafiltrationsschritt kann dabei sowohl portionsweise als auch kontinuierlich erfolgen. Für das erfindungsgemäße Verfahren im Sinne einer guten Salzabtrennung ist es dabei oft vorteilhaft, zunächst durch Nanofiltration aufzukonzentrieren und im Anschluss zu diafiltrieren. Gegebenenfalls kann die Sequenz aus Aufkonzentration und Diafiltration wiederholt werden.

Als Diazokomponenten I sind Aminoarylsulfonsäuren wie o-, m- und p-Aminobenzolsulfonsäure, 1-Aminobenzol-3,5-disulfonsäure, 1-Aminobenzol-2,4-disulfonsäure, 1-Aminobenzol-2,5-disulfonsäure, 1-Naphthylamin-2-sulfonsäure, 1-Naphthylamin-3-sulfonsäure, 1-Naphthylamin-4-sulfonsäure, 1-Naphthylamin-5-sulfonsäure 1-Naphthylamin-6-sulfonsäure, 1-Naphthylamin-7-sulfonsäure, 1-Naphthylamin-8-sulfonsäure, 1-Naphthylamin-3,6-disulfonsäure, 1-Naphthylamin-3,8-disulfonsäure, 1-Naphthylamin-4,7-disulfonsäure, 1-Amino-8-hydroxynaphthalin-4,6-disulfon-säure, 1-Amino-8-hydroxynaphthalin-4-sulfonsäure, 1-Amino-8-hydroxynaphthalin-3,6-disulfonsäure, 2-Aminonaphthalin-1-sulfonsäure, 2-Naphthylamin-5-sulfonsäure, 2-Naphthylamin-6-sulfonsäure, 2-Naphthylamin-7-sulfonsäure, 2-Aminonaphthalin-8-sulfonsäure, 2-Naphthylamin-1,5-disulfonsäure, 2-Naphthylamin-3,6-disulfonsäure, 2-Naphtylamin-4,8-disulfonsäure, 2-Naphthylamin-5,7-disulfonsäure, 2-Naphthylamin-6,8-disulfonsäure, 2-Naphthylamin-3,6-disulfonsäure, 2-Naphthylamino-5,7-disulfonsäure , 2-Naphthylamin-3,6,8-trisulfonsäure , 2-Amino-8-hydroxynaphthalin-6-sulfonsäure, 2-Amino-5-hydroxynaphthalin-7-sulfonsäure, 2-Amino-3-hydroxynaphthalin-6-sulfonsäure und 2-Amino-5- hydroxynaphthalin-1,7-disulfonsäure zu nennen.

Bevorzugt werden Aminoarylsulfonsäuren, bei denen Ar Phenylen oder Naphthylen bedeutet, die jeweils mit einer Sulfogruppe substituiert sein können. Besonders bevorzugt werden o-, m- und p-Aminobenzolsulfonsäure, insbesondere Sulfanilsäure (p-Aminobenzolsulfonsäure).

Als Kupplungskomponenten sind die Kupplungsprodukte eines Phenylendiamins, das gegebenenfalls methylsubstituiert ist, auf sich selbst zu nennen. Diese Produkte sind Azofarbstoffgemische, deren Hauptkomponente ein Bisazofarbstoff ist. Geeignete Kupplungsprodukte sind Toluoldiamine wie 2,3-, 2,4- 2,5- und 2,6- sowie 3,4-Toluoldiamin und bevorzugt 2,4-Toluoldiamin dessen Kupplungsprodukt mit sich selbst Basic Brown 4 (C.I. 21010) ist. Besonders bevorzugt wird Vesuvin, das Kupplungsprodukt von m-Phenylendiamin auf sich selbst.

Die Diazotierung der Aminoarylsulfonsäuren I erfolgt mit üblichen Diazotierungsmitteln wie salpetriger Säure, die im Sauren aus Alkalinitrit gebildet wird. Weiterhin sind Nitrosylschwefelsäure und Alkylnitrit, speziell Neopentylglykoldinitrit, geeignete Diazotierungsmittel.

Nach Zerstörung des überschüssigen Nitrits, beispielsweise mit Amidosulfonsäure, wird das das Diazoniumsalz enthaltende Reaktionsgemisch der in der Regel wässrigen Lösung des Kupplungsproduktes eines Phenylendiamins auf sich selbst, das gegebenenfalls methylsubstituiert ist, zugesetzt. Die Kupplung erfolgt bevorzugt im pH-Bereich von 4 bis 8, besonders bevorzugt von 5 bis 6.

Man stellt den pH-Wert für die Kupplung mit dem Fachmann bekannten Mitteln ein. Hierfür geeignete Basen sind beispielsweise basische Metallhydroxide wie Natronlauge, basische Metallcarbonate wie Natriumcarbonat, Natriumhydrogencarbonate, oder Natriumdihydrogenphosphate, Amine wie Ethanolamin, oder Alkalisalze von Carbonsäuren wie Natriumacetat, Lithiumacetat, Kaliumacetat, Natriumformiat, Natriumpropionat, Natriumoxalat, Natriumsuccinat, Natriumglutamat, Natriumadipinat, Natriumglykolat, Natriumlactat, Natriummalat, Natriumcitrat, Natriumtartrat, Natriumfumarat oder Natriummaleinat.

Die Diazokomponenten I können einzeln oder in ihren Mischungen eingesetzt werden. Bei Einsatz der Gemische erhält man Farbstoffgemische, die auch unsymmetrisch substituierte Farbstoffe enthalten. Nach einer bevorzugten Verfahrensvariante werden keine Diazokomponentengemische gekuppelt. Rein formal erhält man bei zweimolarer Kupplung einer Diazokomponente I auf das Kupplungsproduktes eines Phenylendiamins auf sich selbst, das gegebenenfalls methylsubstituiert ist, einen symmetrischen Farbstoff. In der Regel liegt jedoch ein Gemisch vor, welches unter anderem aus dem einfachen, zweifachen, dreifachen und vierfachen Kupplungsprodukt besteht.

Die Kupplung erfolgt in der Regel im Temperaturbereich von 0 bis 20°C. Um die Umsetzung zu vervollständigen, wird bevorzugt auf Temperaturen von 20 bis 30°C erwärmt.

Auf 1 Mol Kupplungskomponente werden bevorzugt 1 bis 4, besonders bevorzugt 1,5 bis 2,5 insbesondere 1,8 bis 2,2 Mol Diazokomponente eingesetzt. Auf diese Weise kann man in der Regel einen Gehalt von < 10 Gew.-% des Kupplungsproduktes eines Phenylendiamins auf sich selbst, das gegebenenfalls methylsubstituiert ist im Produktgemisch erreichen.

Trotz dieses geringen Gehaltes an Kupplungsprodukt eines Phenylendiamins auf sich selbst, das gegebenenfalls methylsubstituiert ist, wäre zu erwarten gewesen, dass dieses innerhalb kurzer Zeit die Membranen der Nanofiltration belegt, da es sich im alkalischen Milieu nur sehr schlecht in Wasser löst. Überraschenderweise tritt dieser Effekt nicht auf, sondern dieses Kupplungsprodukt wird vielmehr in Lösung gehalten. Eine Erklärung wäre, dass das Reaktionsmedium einen lösungsvermittelnden Einfluss hat. Bei einer besonders bevorzugten Verfahrensvariante kuppelt man ein Phenylendiamin, das gegebenenfalls methylsubstituiert ist, auf sich selbst und setzt dieses Kupplungsprodukt ohne Zwischenisolierung zum sulfonsauren Azofarbstoff um, indem man eine wenigstens äquimolare Menge von diazotierter Aminoarylsulfonsäure I auf es kuppelt, den erhaltenen Farbstoff im Basischen löst und anschließend eine Nanofiltration durchführt.

Das Kupplungsprodukt eines Phenylendiamins auf sich selbst, das gegebenenfalls methylsubstituiert ist, vorzugsweise Vesuvin wird dabei auf allgemein bekannte Weise hergestellt, indem man formal einen von drei Teilen Diamin tetrazotiert und auf die restlichen zwei Teile kuppeln lässt. Hierzu werden 3 Mol Diamin mit 1,5 bis 2,5 Mol, bevorzugt 1,8 bis 2,2 Mol Natriumnitrit im Sauren umgesetzt. Bevorzugt wird dabei ein Verfahren bei dem man die Säure über einen längeren Zeitraum beispielsweise 30 bis 60 bevorzugt 40 bis 50 Minuten zudosiert. Zur Vervollständigung der Reaktion stellt man den pH-Wert des Reaktionsgemisches auf 2 bis 4 und rührt noch einige Zeit nach. Die gesamte Umsetzung zum Kupplungsprodukt führt man bei einer Temperatur von -5 bis +25 °C, vorzugsweise 0 bis 15 °C durch. Nach beendeter Nitritzugabe wird das Reaktionsgemisch über einen Zeitraum von 0,5 bis 4 Stunden gerührt. Anschließend kann zum Reaktionsgemisch direkt das Diazoniumsalz der Aminoarylsulfonsäure I dosiert werden.

Die nach dem erfindungsgemäßen Verfahren erhaltenen Lösungen der sulfonsauren Azofarbstoffe können direkt als Flüssigformulierung weiterverwendet werden.

Sofern erwünscht, werden die Farbstofflösungen mit solubilisierenden Zusätzen versetzt. Solche Zusätze sind beispielsweise mit Wasser mischbare organische Lösungsmittel wie C₁-C₄-Alkanole, z.B. Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2- oder 1,4-Butylenglykol, Neopentylglykol, Hexan-1,6-diol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder - monoethylether, Diethylenglykolmonobutylether (Butyldiglykol) oder Triethylenglykolmonomethyl- oder -monoethylether, C₁-C₄-Alkylester von mehrwertigen Alkoholen, γ-Butyrolacton oder Dimethylsulfoxid. Geeignete solubilisierende Zusätze sind ferner Lactame, wie Caprolactam, Pyrrolidin-2-on oder N-Methylpyrrolidin-2-on, Harnstoff, cyclische Harnstoffe, wie 1,3-Dimethylimidazolidin-2-on oder 1,3-Dimethylhexahydropyrimid-2-on sowie Polyacrylsäuren, Polyacrylsäurederivate, Polyvinylamide, Polyvinylacetate, Polyvinylalkohole, Polyvinylpyrrolidone, Polysiloxane oder Copolymere der jeweiligen Monomere. Desgleichen können Oligomere des Ethylenoxids oder Propylenoxids oder Derivate dieser Oligomere zur Anwendung kommen.

Bevorzugte solubilisierende Zusätze sind Harnstoffe, Mono, Di- oder Triethanolamin, Caprolactam, Mono-, Di- oder Trialkylenglykole, die C₂-C₅-Alkyleneinheiten aufweisen und/oder Oligo- und Polyalkylenglykole mit Ethylen- und/oder Propyleneinheiten sowie deren C₁-C₄-Alkylether und C₁-C₄-Alkylester. Ganz besonders bevorzugt sind Ethylenglykol, 1,2- oder 1,3-Propylenglykol, Neopentylglykol, Butyldiglykol, Alkylpolyethylenglykole (MW 200 - 500), Harnstoffe und Caprolactam.

Bevorzugte Flüssigformulierungen enthalten im wesentlichen

| | |
|---|---|
| 10 bis 30 Gew.-% | sulfonsaure Azofarbstoffe (bezogen auf den Farbstoff ohne Gegenion) |
| 0 bis 30 Gew.-% | solubilisierende Zusätze |

bezogen auf die Gesamtmenge der wässrigen Flüssigformulierung. Besonders bevorzugt werden Flüssigeinstellungen, die im wesentlichen 10 bis 30 Gew.-% sulfonsaure Azofarbstoffe und 1 bis 30 Gew.-% bevorzugt 1 bis 5 Gew.-% solubilisierende Zusätze speziell Ethylenglykol, 1,2- oder 1,3-Propylenglykol, Neopentylglykol, Butyldiglykol, Alkylpolyethylenglykole (MW 200 - 600), Harnstoffe und/oder Caprolactam enthalten.

Die erfindungsgemäß erhaltenen Flüssigformulierungen zeichnen sich durch eine hervorragende Lagerstabilität aus. Die Flüssigformulierungen eignen sich unter anderem zum Färben und Bedrucken cellulosischer Fasermaterialien wie holzhaltige und holzfreie Papiermassen.

Mithilfe des erfindungsgemäßen Verfahrens erhält man verkaufsfertige Flüssigformulierungen von sulfonsauren Azofarbstoffen, die die direkte Herstellung von Färbebädern durch ledigliches Verdünnen mit Wasser ermöglichen. Die Flüssigformulierungen weisen einen geringen Salzgehalt auf. Das erfindungsgemäße Verfahren vermeidet die Isolierung von Feststoffen und ermöglicht ausgehend von einem gegebenenfalls methylsubstituierten Phenylendiamin, oder nach einer bevorzugten Variante ausgehend von m-Phenylendiamin, die Herstellung von salzarmen, stabilen Flüssigformulierungen.

Die nachfolgenden Beispiele sollen die Erfindung näher erläutern. Bei den Angaben in Teilen handelt es sich um Gewichtsteile sofern nicht anders erwähnt.

### Beispiele

### Synthesebeispiel 1

### a) Herstellung der Kupplungskomponente (Vesuvinlösung)

Zu einer Mischung von 1720 Teilen Wasser und 43,8 Teilen Salzsäure (20 gew.-%ig) gab man bei einer Temperatur von 15 - 25 °C 140,6 Teile m-Phenylendiamin und rührte für 30 min. Anschließend gab man 1390 Teile Eis hinzu, die Temperatur der Mischung soll < 0 °C betragen. Danach wurden 75,2 Teile festes Natriumnitrit portionsweise zugefügt und weitere 5 min gerührt. Dann wurden 394,3 Teile Salzsäure (20 gew.-%ig) innerhalb von 40 - 50 min zudosiert. Während der Zugabe wurde die Temperatur des Reaktionsgemisches durch Zugabe von insgesamt 300 Teilen Eis zwischen 0 und 3 °C gehalten. Nachdem man weitere 10 min bei 3 °C gerührt hatte, ließ man das überschüssige Diazoniumsalz durch portionsweise Zugabe von insgesamt 10,5 Teilen m-Phenylendiamin abreagieren (auskuppeln). Danach wurde der pH-Wert durch Zugabe von 67 Teilen Natronlauge (25 gew.-%ig) auf pH = 3 eingestellt und anschließend noch 60 min bei 3 °C gerührt.

### b) Herstellung der Diazokomponente (diazotierte Sulfanilsäure)

In einer Mischung von 1264 Teilen Wasser und 149,9 Teilen Natronlauge (25 gew.-%ig) wurden 159,9 Teile Sulfanilsäure gelöst. Anschließend fügte man 1400 Teile Eis und 318,4 Teile Natriumnitritlösung (20 gew.-%ig) hinzu. Die Temperatur des Reaktionsgemisches betrug nach der Zugabe zwischen 0 und 5 °C. Bei dieser Temperatur gab man 382,5 Teile Salzsäure (20 gew.-%ig) hinzu und zerstörte nach 30 min den Nitritüberschuß mit 0,8 Teilen Amidosulfonsäure.

### c) Kupplung

Die gemäß Vorschrift a) hergestellte Suspension der Kupplungskomponente wurde auf 20 °C erwärmt. Anschließend wurden 28 Teile Natriumacetat hinzugefügt. Danach wurde die Suspension der Diazokomponente binnen 90 min bei 20 °C zudosiert. Während der Dosierung wurde der pH-Wert des Reaktionsgemisches durch Zugabe von insgesamt 306 Teilen Natronlauge (25 gew.-%ig) bei pH = 5 gehalten. Man rührte das Reaktionsgemisch über Nacht bei Raumtemperatur und stellte dann durch Zugabe von 32,2 Teilen Ammoniakwasser (25 gew.-%ig NH₃-Lösung) einen pH-Wert von 9,5 ein. Nach einer Klarfiltration (Filtrationsrückstand < 0,1 Gew. %) erhielt man 8180 Teile einer Farbstoffrohlösung, die als Ausgangsmaterial für die Membranfiltration diente.

### Synthesebeispiel 2

### a) Herstellung der Kupplungskomponente (Vesuvinlösung)

Zu einer Mischung von 1720 Teilen Wasser und 43,8 Teilen Salzsäure (20 gew.-%ig) gab man bei einer Temperatur von 15 - 25 °C 140,6 Teile m-Phenylendiamin und rührte für 30 min. Anschließend gab man 1390 Teile Eis hinzu, die Temperatur der Mischung soll < 0 °C betragen. Danach wurden 188 Teile Natriumnitritlösung (40 gew.-%ig) zudosiert und weitere 5 min gerührt. Dann wurden 394,3 Teile Salzsäure (20 gew.-%ig) innerhalb von 40 - 50 min zudosiert. Während der Zugabe wurde die Temperatur des Reaktionsgemisches durch Zugabe von insgesamt 300 Teilen Eis zwischen 0 und 3 °C gehalten. Nachdem man weitere 10 min bei 3 °C gerührt hatte, wurde das überschüssige Diazoniumsalz durch portionsweise Zugabe von insgesamt 10,5 Teilen m-Phenylendiamin ausgekuppelt. Danach wurde der pH-Wert durch Zugabe von 67 Teilen Natronlauge (25 gew.-%ig) auf pH = 3 eingestellt und anschließend noch 60 min bei 3 °C gerührt.

### b) Herstellung der Diazokomponente (diazotierte Sulfanilsäure)

Zu einer Mischung von 1370 Teilen Eis, 382,5 Teilen Salzsäure (20 gew.-%ig) und 4 Teilen Emulan EL dosierte man bei 0 bis 3 °C, binnen 30 min unter starkem Rühren eine Lösung von 159,9 Teilen Sulfanilsäure in 1264 Teilen Wasser, 149,9 Teilen Natronlauge (25 gew.-%ig) und 318,4 Teilen Natriumnitrit (20 gew..-%ig). Ca. 5 min nach vollendeter Zugabe erwärmte man das Reaktionsgemisch auf 10 °C und rührte weitere 60 min. Anschließend zerstörte man den Nitritüberschuß durch Zugabe von insgesamt ca 1,5 Teilen Amidosulfonsäure.

### c) Kupplung

Die gemäß Vorschrift 2a) hergestellte Suspension der Kupplungskomponente wurde auf 20 °C erwärmt. Danach wurde die Suspension der Diazokomponente binnen 90 min zudosiert. Während der Dosierung wurde der pH-Wert des Reaktionsgemisches durch Zugabe von insgesamt 204 Teilen Natronlauge (25 gew.-%ig) und 43,4 Teilen Ammoniakwasser (25 gew.-%ig) bei pH = 5 gehalten. Man rührte das Reaktionsgemisch über Nacht bei Raumtemperatur und stellte dann durch Zugabe von 32,2 Teilen Ammoniakwasser (25 gew.-%ig) einen pH-Wert von 9,5 ein. Nach einer Klarfiltration (Filtrationsrückstand < 0,1 Gew.-%) erhielt man 8180 Teile einer Farbstoffrohlösung, die als Ausgangsmaterial für die Membranfiltration diente.

### Synthesebeispiel 3

### a) Herstellung der Kupplungskomponente (Vesuvinlösung)

Zu einer Mischung von 74 Teilen Ameisensäure (> 99 gew.-%ig) und 160 Teilen Wasser gab man 577 Teile Eis, so dass die Temperatur ca. 0 - 5 °C betrug. Anschließend dosierte man gleichzeitig innerhalb von 120 min einerseits eine Lösung von 219,6 Teilen m-Phenylendiamin (m-PDA) in 400 Teilen Wasser und 192,2 Teilen Essigsäure (> 99 gew.-%ig) und andererseits 459,5 Teile einer Natriumnitritlösung (20 gew.-%ig). Das Reaktionsgemisch wurde während der Zugabe stark gerührt und durch Zugabe von insgesamt 1154 Teilen Eis bei einer Temperatur zwischen 10 und 15 °C gehalten. Nach vollständiger Zugabe ließ man das Gemisch auf 40 °C erwärmen und rührte für 3 h bei 40 °C. Nach einer Klarfiltration (Filtrationsrückstand < 0,3 Gew.-%) erhielt man 3230 Teile einer Farbstoffrohlösung, die als Ausgangsmaterial für die Membranfiltration diente.

### Allgemeine Vorschrift zur Nanofiltration A

Für die Nanofiltrationsbeispiele 1-3 wurde eine Rührdruckzelle mit einem Innenvolumen von ca. 30 ml mit einer Syntheselösung des jeweiligen Farbstoffs befüllt. Die Rührdruckzelle wurde in einem Wasserbad auf die Betriebstemperatur von 40°C temperiert und im Anschluss durch Aufpressen von Stickstoff auf Betriebsdruck gebracht. Auf der Niederdruckseite der Membran wird Permeat entnommen. Die freie Membranfläche der in den Rührdruckzellen eingesetzten Flachmembranen betrug 3,8 cm². Auf der Druckseite der Membran (Retentatseite) sorgte ein sich schnell drehender, frei aufgehängter Magnetrührer für eine ausreichende Durchmischung. Nach Ausschleusung der gewünschten Permeatmenge wurde die Rührdruckzelle entspannt und das Retentat wurde entnommen. Über die Bilanz wurde der Massenkonzentrationsfaktor MK (Einsatzmasse / Retentatmasse) berechnet. Über eine Spektralanalyse wurde der Farbstoffgehalt des Einsatzes, des Retentats und des Permeats bestimmt. Der Chloridgehalt sowie der Acetat- und Formiatgehalt wurde durch Titration bestimmt. Aus den Analyseergebnissen wurden wie in der gängigen Literatur beschrieben (z.B. M. Cheryan, Ultrafiltration Handbook, 1986) die jeweiligen gemittelten Rückhaltungen an der Membran ermittelt. Der Permeatfluss ergab sich aus dem zeitlichen Verlauf des Permeatgewichts und der freien Membranfläche.

### Nanofiltrationsbeispiel 1

Die unter A beschriebene Rührdruckzelle wurde mit einer keramischen NF-Membran (0,9 nm Porendurchmesser, Trennschicht TiO₂, Fa. Inocermic) bestückt. Der Transmembrandruck betrug bei allen Versuchen in dieser Anordnung 5 bar.

Zunächst wurden 35 g einer Direktbraun 44 - Lösung aus dem Synthesebeispiel 1c) eingewogen und um einen Massenkonzentrationsfaktor MK von 2,13 aufkonzentriert. Es wurden Rückhaltungen des Farbstoffs von 97,9 % und des Chlorids von -8,3 % über Spektralanalyse bzw. Titration bestimmt. Der mittlere Permeatfluss betrug 20,7 kg/m²h.

Im Anschluss wurde in dieselbe Anordnung 34,9 g einer Vesuvin-Lösung aus dem Synthesebeispiel 3 a) eingewogen und um einen MK von 2,54 aufkonzentriert. Aus der Spektralanalyse ergab sich eine Farbstoffrückhaltung von 98,4 %. Über Titration wurde eine Formiatrückhaltung von 32,2 % und eine Acetatrückhaltung von 20,3 % ermittelt. Der mittlere Permeatfluss betrug hier 9,1 kg/m²h.

Im Anschluss wurde die Zelle erneut mit 34 g der Direktbraun 44 Lösung aus dem Synthesebeispiel 1c) befüllt und um einen MK von 2,08 aufkonzentriert. Die Rückhaltungen des Farbstoffs und des Chlorids wurden zu 98,2 % bzw. -5,0 % bestimmt. Der mittlere Permeatfluss betrug 20,2 kg/m²h.

Beide Farbstofflösungen ließen sich gut nanofiltrieren. Es wurde beobachtet, dass trotz Wechsel zwischen kationischer und anionischer Farbstoff, die Membran gut durchgängig blieb. Die Membran ist hervorragend für sowohl anionische Direktfarbstoffe wie auch kationische Farbstoffe geeignet.

### Nanofiltrationsbeispiel 2

Die unter A beschriebene Rührdruckzelle wurde mit einer polymeren NF-Membran ( Desal 5 DK, Fa. Osmonics) bestückt. Der Transmembrandruck betrug bei allen Versuchen in dieser Anordnung 30 bar.

Zunächst wurden 32,6 g der nach Synthesebeispiel 1 unter c) erhaltenen Farbstofflösung eingewogen und um einen MK von 2,06 aufkonzentriert. Es wurden Rückhaltungen des Farbstoffs von 99,3 % und des Chlorids von 48,3 % über Spektralanalyse bzw. Titration bestimmt. Der mittlere Permeatfluss betrug 14,8 kg/m²h.

Im Anschluss wurde in dieselbe Anordnung 32,6 g einer Vesuvin-Lösung des Synthesebeispiel 3a) eingewogen und um einen MK von 2,14 aufkonzentriert. Aus der Spektralanalyse ergab sich eine Farbstoffrückhaltung von 99,8 %. Über Titration wurde eine Formiatrückhaltung von 51,5 % und eine Acetatrückhaltung von 26,1 % ermittelt. Der mittlere Permeatfluss betrug hier 7,6 kg/m²h.

Im Anschluss wurde die Zelle erneut mit 31,6 g der nach Synthesebeispiel 1 unter c) erhaltenen Farbstofflösung befüllt und um einen MK von 2,03 aufkonzentriert. Die Rückhaltungen des Farbstoffs und des Chlorids wurden zu 99,3 % bzw. 57,1 % bestimmt. Der mittlere Permeatfluss betrug 10,6 kg/m²h.

### Nanofiltrationsbeispiel 3

Die unter A beschriebene Rührdruckzelle wurde mit einer polymeren NF-Membran (NF 7450, Fa. Nitto) bestückt. Der Transmembrandruck betrug bei allen Versuchen in dieser Anordnung 30 bar.

Zunächst wurden 33,7 g der nach Synthesebeispiel 1 unter c) erhaltenen Farbstofflösung eingewogen und um einen MK von 2,08 aufkonzentriert. Es wurden Rückhaltungen des Farbstoffs von 99,1 % und des Chlorids von 17,3 % über Spektralanalyse bzw. Titration bestimmt. Der mittlere Permeatfluss betrug 18,2 kg/m²h.

Im Anschluss wurde in die selbe Anordnung 32,7 g der nach Synthesebeispiel 3a) eingewogen. Es wurde unter gleichen Versuchsbedingungen kein Permeatfluss mehr beobachtet (< 1 kg/m²h).

Dieses Ergebnis zeigt, dass die Membran sehr wohl für die Nanofitration des sulfonsauren Azofarbstoffes geeignet ist, jedoch nicht für den Wechsel zwischen unterschiedlich geladenen Farbstoffen.

### Allgemeine Vorschrift zur Nanofiltration B

Die Nanofiltrationsbeispiele 4-6 wurden in einer Querstromfiltrationsapparatur durchgeführt, in die sowohl keramische Ein- und Multikanalelemente als auch polymere Wickelmodule eingebaut werden können. Die erforderliche Überströmung sowie der erforderliche Betriebsdruck wurden durch eine Kolbenmembranpumpe erzeugt. Durch ein Druckhalteventil nach dem Membranmodul wurde der Transmembrandruck eingestellt. Das Retentat wurde in den Vorlagebehälter zurückgeführt. In der Diafiltrationsfahrweise wurde entnommenes Permeat durch kontinuierliche, standgeregelte Zugabe des Diafiltrationsmediums in den Vorlagebehälter ersetzt. Die Diafiltration wurde durch den Massenaustauschfaktor, MA = (Masse entnommenes Permeat) / (Retentatmasse zu Beginn), charakterisiert.

### Nanofiltrationsbeispiel 4 (Aufkonzentration + Diafiltration):

In die unter B beschriebene Versuchsanlage wurde ein Mehrkanalelement einer keramischen NF-Membran (0,9 nm, TiO₂, Fa. Inocermic) mit 19 Kanälen mit einem Innendurchmesser von 3,5 mm eingebaut. Es wurden 4,5 kg der gemäß Synthesebeispiel 2 unter c) erhaltenen Farbstofflösung eingewogen und anschließend zunächst aufkonzentriert. Der Transmembrandruck betrug 25 bar und die Temperatur 60 °C. Die Kanäle wurden mit einer Strömungsgeschwindigkeit von ca. 1,4 m/s durchströmt. In Abhängigkeit von der entnommenen Permeatmenge (MK = 3,02) wurden dabei folgende gemittelten Rückhaltungen und mittlere Permeatflüsse ermittelt.

| MK | Rückhaltung in % | | Permeatfluss in kg/m²h |
|---|---|---|---|
| | Farbstoff | Chlorid | |
| 3,02 | 98,3 | -10,2 | 30,6 |

Anschließend wurden 1,43 kg des erhaltenen Konzentrats unter den gleichen Versuchsbedingungen mit verdünntem Ammoniakwasser (pH = 9,5) als Diafiltrationsmedium diafiltriert. In Abhängigkeit von der entnommenen Permeatmenge (MA = 2,05) wurden dabei folgende gemittelten Rückhaltungen und mittlere Permeatflüsse ermittelt.

| MA | Rückhaltung in % | | Permeatfluss in kg/m²h |
|---|---|---|---|
| | Farbstoff | Chlorid | |
| 2,05 | 98,9 | -31,0 | 32,3 |

In einer abschließenden Aufkonzentration des erhaltenen Retentats der Diafiltration wurde die Endkonzentration des Farbstoffs erreicht. In Abhängigkeit von der entnommenen Permeatmenge (MA = 1,98) wurden dabei folgende gemittelten Rückhaltungen und mittlere Permeatflüsse ermittelt.

| MK | Rückhaltung in % | | Permeatfluss in kg/m²h |
|---|---|---|---|
| | Farbstoff | Chlorid | |
| 1,96 | 99,0 | -57,2 | 20,1 |

Die als entsalztes Konzentrat erhaltene Lösung hat einen Chloridgehalt von 0,12 g NaCl/100g und einen Farbstoffgehalt von 23,7 Gew-%.

### Nanofiltrationsbeispiel 5 (Diafiltration + Aufkonzentration):

Es wurden in die in B beschriebene Versuchsanlage mit derselben Membran 5 kg einer Lösung der gemäß Synthesebeispiel 2 unter c) erhaltenen Farbstofflösung eingewogen und anschließend zunächst mit verdünntem Ammoniakwasser (pH = 9,5) als Diafiltrationsmedium diafiltriert. Der Transmembrandruck betrug 25 bar und die Temperatur 60 °C. Die Kanäle wurden mit einer Strömungsgeschwindigkeit von ca. 1,4 m/s durchströmt. In Abhängigkeit von der entnommenen Permeatmenge (MA = 2,02) wurden dabei folgende gemittelten Rückhaltungen und mittlere Permeatflüsse ermittelt.

| MK | Rückhaltung in % | | Permeatfluss in kg/m²h |
|---|---|---|---|
| | Farbstoff | Chlorid | |
| 2,02 | 98,3 | 1,9 | 126,6 |

Anschließend wurde das erhaltene diafiltrierte Retentat unter den gleichen Versuchsbedingungen aufkonzentriert. In Abhängigkeit von der entnommenen Permeatmenge (MK = 6,21) wurden dabei folgende Rückhaltungen und Permeatflüsse ermittelt.

| MK | Rückhaltung in % | | Permeatfluss in kg/m²h |
|---|---|---|---|
| | Farbstoff | Chlorid | |
| 6,21 | 99,2 | -30,5 | 52,3 |

Die als entsalztes Konzentrat erhaltene Lösung hat einen Chloridgehalt von 0,24 g NaCl/100g und einen Farbstoffgehalt von 24,8 Gew-%.

### Nanofiltrationsbeispiel 6

In die unter B beschriebene Versuchsanlage zur Querstromfiltration wurde ein Wickelmodul mit einer polymeren NF-Membran eingebaut (Desal 5 DK, Fa. Osmonics).

Es wurden 17 kg einer Syntheselösung von der gemäß Synthesebeispiel 1 unter c) erhaltenen Farbstofflösung eingewogen und anschließend zunächst mit verdünntem Ammoniakwasser (pH = 9,5) als Diafiltrationsmedium diafiltriert. Der Transmembrandruck betrug 30 bar und die Temperatur 40 °C. In Abhängigkeit von der entnommenen Permeatmenge (MA = 3,9) wurden dabei folgende gemittelten Rückhaltungen und mittlere Permeatflüsse ermittelt.

| MA | Rückhaltung in % | | Permeatfluss in kg/m²h |
|---|---|---|---|
| | Farbstoff | Chlorid | |
| 3,9 | 99,2 | 64,3 | 42,1 |

Anschließend wurde das erhaltenen diafiltrierte Retentat unter den gleichen Versuchsbedingungen aufkonzentriert. In Abhängigkeit von der entnommenen Permeatmenge (MK = 7,4) wurden dabei folgende Rückhaltungen und Permeatflüsse ermittelt.

| MK | Rückhaltung in % | | Permeatfluss in kg/m²h |
|---|---|---|---|
| | Farbstoff | Chlorid | |
| 7,4 | 89,8 | 10,5 | 14,6 |

Die als entsalztes Konzentrat erhaltene Lösung hat einen Chloridgehalt von 0,92 g NaCl / 100g und einen Farbstoffgehalt von 24,6 Gew-%.

## Patentansprüche

1. Verfahren zur Herstellung einer Flüssigformulierung von Salzen sulfonsaurer Azofarbstoffe durch Kuppeln einer wenigstens äquimolaren Menge von diazotierten Aminoarylsulfonsäuren I
H₂N-Ar-SO₃H (I)
wobei Ar Phenylen, das einfach mit Sulfo, oder Naphthylen, das ein- oder zweifach mit Sulfo und/oder einfach mit Hydroxy substituiert sein kann, bedeutet, auf das Kupplungsprodukt eines Phenylendiamins auf sich selbst, das gegebenenfalls methylsubstituiert ist, **dadurch gekennzeichnet, dass** man den Azofarbstoff im Basischen löst und anschließend eine Nanofiltration durchführt.

2. Verfahren zur Herstellung einer Flüssigformulierung nach Anspruch 1, **dadurch gekennzeichnet, dass** man den Farbstoff mit Natronlauge und einer stickstoffhaltigen Base löst.

3. Verfahren zur Herstellung einer Flüssigformulierung nach einem der Ansprüche 1 oder 2, **dadurch gekennzeichnet, dass** der Farbstoff mit Natronlauge und Ammoniakwasser gelöst wird.

4. Verfahren zur Herstellung einer Flüssigformulierung nach einem der Ansprüche 1 bis 3, **dadurch gekennzeichnet, dass** das Molverhältnis Natronlauge/stickstoffhaltige Base 1/19 bis 19/1 beträgt.

5. Verfahren zur Herstellung einer Flüssigformulierung nach einem der Ansprüche 1 bis 4, **dadurch gekennzeichnet, dass** man den Farbstoff löst, indem man den pH-Wert des Reaktionsgemisches auf einen Wert von 8,5 bis 11 stellt.

6. Verfahren zur Herstellung einer Flüssigformulierung nach einem der Ansprüche 1 bis 5, **dadurch gekennzeichnet, dass** man als Membran für die Nanofiltration eine Membran mit keramischen Trennschichten einsetzt.

7. Verfahren zur Herstellung einer Flüssigformulierung nach einem der Ansprüche 1 bis 6, **dadurch gekennzeichnet, dass** der Farbstoff mit Natronlauge und einer stickstoffhaltigen Base gelöst wird und während der Nanofiltration der pH-Wert mit der stickstoffhaltigen Base konstant gehalten wird.

8. Verfahren zur Herstellung einer Flüssigformulierung nach den Ansprüchen 1 bis 7, **dadurch gekennzeichnet, dass** man ausgehend von o-, m- und/oder p-Aminobenzolsulfonsäure als Diazokomponente die Azofarbstoffe herstellt.

9. Verfahren zur Herstellung einer Flüssigformulierung nach den Ansprüchen 1 bis 8, **dadurch gekennzeichnet, dass** man das Kupplungsprodukt eines Phenylendiamins auf sich selbst, das gegebenenfalls methylsubstituiert ist, und die Diazokomponente I in einem stöchiometrischen Verhältnis im Bereich von 1 : 1 bis 1 : 4 einsetzt.

10. Verfahren zur Herstellung einer Flüssigformulierung von Salzen sulfonsaurer Azofarbstoffe umfassend:
a) Herstellen eines Kupplungsproduktes eines Phenylendiamins auf sich selbst, das gegebenenfalls methylsubstituiert ist;
b) ohne Zwischenisolierung dieses Kupplungsproduktes Kuppeln einer wenigstens äquimolaren Menge von diazotierten Aminoarylsulfonsäuren I
H₂N-Ar-SO₃H (I)
wobei Ar Phenylen, das einfach mit Sulfo, oder Naphthylen, das ein- oder zweifach mit Sulfo und/oder einfach mit Hydroxy substituiert sein kann, bedeutet auf das nach a) erhaltene Kupplungsprodukt und
c) Lösen des Farbstoffs im Basischen und anschließende Nanofiltration.

## Claims

1. A process for producing a liquid formulation of salts of sulfonated azo dyes by coupling an at least equimolar amount of diazotized aminoarylsulfonic acids I
H₂N - Ar - SO₃H (I)
where Ar is phenylene (which may be monosubstituted by sulfo) or naphthylene (which may be mono- or disubstituted by sulfo and/or monosubstituted by hydroxyl) onto the coupling product of an unsubstituted or methyl-substituted phenylenediamine with itself, which comprises dissolving the azo dye in a basic medium and then subjecting the solution to a nanofiltration.

2. The process for producing a liquid formulation according to claim 1 wherein the dye is dissolved with aqueous sodium hydroxide solution and a nitrogenous base.

3. The process for producing a liquid formulation according to claim 1 or claim 2 wherein the dye is dissolved with aqueous sodium hydroxide solution and ammoniacal water.

4. The process for producing a liquid formulation according to any of claims 1 to 3 wherein the molar ratio of aqueous sodium hydroxide solution/nitrogenous base is in the range from 1/19 to 19/1.

5. The process for producing a liquid formulation according to any of claims 1 to 4 wherein the dye is dissolved by adjusting the pH of the reaction mixture to a value in the range from 8.5 to 11.

6. The process for producing a liquid formulation according to any of claims 1 to 5 wherein the membrane used for the nanofiltration is a membrane having ceramic separating layers.

7. The process for producing a liquid formulation according to any of claims 1 to 6 wherein the dye is dissolved with aqueous sodium hydroxide solution and a nitrogenous base and the pH is kept constant with the nitrogenous base during nanofiltration.

8. The process for producing a liquid formulation according to claims 1 to 7 wherein the azo dyes are prepared starting from o-, m- and/or p-aminobenzenesulfonic acid diazo component.

9. The process for producing a liquid formulation according to claims 1 to 8 wherein the unsubstituted or methyl-substituted coupling product of a phenylenediamine with itself and diazo component I are used in a stoichiometric ratio in the range from 1:1 to 1:4.

10. A process for producing a liquid formulation of salts of sulfonated azo dyes comprising:
a) preparing a coupling product of an unsubstituted or methyl-substituted phenylenediamine with itself;
b) without intervening isolation of this coupling product coupling an at least equimolar amount of diazotized aminoarylsulfonic acids I
H₂N - Ar - SO₃H (I)
where Ar is phenylene (which may be monosubstituted by sulfo) or naphthylene (which may be mono- or disubstituted by sulfo and/or monosubstituted by hydroxyl) onto the coupling product obtained according to a) and
c) dissolving the dye in a basic medium and subsequent nanofiltration.

## Revendications

1. Procédé pour la préparation d'une composition liquide de sels de colorants azoïques acidifiés par un acide sulfonique, par copulation d'une quantité au moins équimolaire d'acides aminoarylsulfoniques I
H₂N-Ar-SO₃H (I)
diazotés, Ar représentant un radical phénylène, qui peut être substitué une fois par un groupe sulfo, ou naphtylène, qui peut être substitué une fois par hydroxy et/ou une ou deux fois par sulfo, sur le produit de condensation d'une phénylènediamine sur elle-même, qui est éventuellement substitué par méthyle, **caractérisé en ce qu'**on dissout le colorant azoïque dans le composé basique et on effectue ensuite une nanofiltration.

2. Procédé pour la préparation d'une composition liquide selon la revendication 1, **caractérisé en ce qu'**on dissout le colorant avec une solution d'hydroxyde de sodium et une base azotée.

3. Procédé pour la préparation d'une composition liquide selon l'une quelconque des revendications 1 et 2, **caractérisé en ce qu'**on dissout le colorant avec une solution d'hydroxyde de sodium et de l'ammoniaque.

4. Procédé pour la préparation d'une composition liquide selon l'une quelconque des revendications 1 à 3, **caractérisé en ce que** le rapport molaire solution d'hydroxyde de sodium/base azotée vaut de 1/19 à 19/1.

5. Procédé pour la préparation d'une composition liquide selon l'une quelconque des revendications 1 à 4, **caractérisé en ce qu'**on dissout le colorant en ajustant le pH du mélange réactionnel à une valeur de 8,5 à 11.

6. Procédé pour la préparation d'une composition liquide selon l'une quelconque des revendications 1 à 5, **caractérisé en ce qu'**on utilise comme membrane pour la nanofiltration une membrane à couches de séparation céramiques.

7. Procédé pour la préparation d'une composition liquide selon l'une quelconque des revendications 1 à 6, **caractérisé en ce qu'**on dissout le colorant avec une solution d'hydroxyde de sodium et une base azotée et pendant la nanofiltration on maintient le pH constant à l'aide de la base azotée.

8. Procédé pour la préparation d'une composition liquide selon l'une quelconque des revendications 1 à 7, **caractérisé en ce qu'**on prépare les colorants azoïques à partir d'acide o-, m- et/ou p-aminobenzène-sulfonique en tant que composant diazotable.

9. Procédé pour la préparation d'une composition liquide selon l'une quelconque des revendications 1 à 8, **caractérisé en ce qu'**on utilise le produit de condensation d'une phénylènediamine sur elle-même, qui est éventuellement substitué par méthyle, et le composant diazotable I en un rapport stoechiométrique dans la plage de 1:1 à 1:4.

10. Procédé pour la préparation d'une composition liquide de sels de colorants azoïques acidifiés par un acide sulfonique, comprenant :
a) la préparation d'un produit de condensation d'une phénylènediamine sur elle-même, qui est éventuellement substitué par méthyle ;
b) sans isolement intermédiaire de ce produit de condensation, copulation d'une quantité au moins équimolaire d'acides aminoarylsulfoniques I
H₂N-Ar-SO₃H (I)
diazotés, Ar représentant un radical phénylène, qui peut être substitué une fois par un groupe sulfo, ou naphtylène, qui peut être substitué une fois par hydroxy et/ou une ou deux fois par sulfo, sur le produit de condensation obtenu selon a) et
c) dissolution du colorant dans le composé basique et nanofiltration subséquente.
